# EUROPEAN PATENT SPECIFICATION

(11) **EP 3 416 843 B1**
(45) Date of publication and mention of the grant of the patent: **31.12.2025**
(21) Application number: 17716602.2
(22) Date of filing: 17.02.2017
(51) Int. Cl.: B60K 6/48, B60W 10/02, B60W 10/06, B60W 10/08, B60W 10/11, B60W 20/40, B60W 20/00, B60W 30/19

(54) **METHOD FOR CONTROLLING A DRIVELINE OF A HYBRID VEHICLE, DRIVELINE AND HYBRID VEHICLE**
VERFAHREN ZUR STEUERUNG EINES ANTRIEBSSTRANG EINES HYBRIDFAHRZEUGS, ANTRIEBSSTRANG SOWIE HYBRIDFAHRZEUG
PROCÉDÉ DE CONTRÔLE D'UNE CHAÎNE DE TRACTION D'UN VÉHICULE HYBRIDE, CHAÎNE DE TRACTION ET VÉHICULE HYBRIDE

(30) Priority: 19.02.2016 IT UB20160890
(43) Date of publication of application: 26.12.2018
(73) Proprietor: Iveco S.p.A., 10156 Torino (IT)
(72) Inventor: PERRONE, Attilio, 16010 SANT'OLCESE (IT)
(74) Representative: Studio Torta S.p.A.
(86) International application number: PCT/IB2017/050923
(87) International publication number: WO 2017/141212

(56) References cited:
- EP-A1- 2 682 293
- EP-A1- 2 957 447
- EP-A2- 1 504 946
- EP-A2- 2 574 516
- WO-A1-2014/033137
- DE-A1- 102012 219 105
- DE-U1- 20 118 908

## Description

### Technical field of the invention

The invention relates to the field of vehicle drivelines, in particular the ones comprising a manual, automatic or robotized gearbox and an electric drivetrain directly or indirectly associated with the main drive shaft.

This type of driveline is used in the field of industrial or commercial vehicles.

DE20118908 and EP2574516 discloses the implementation of an electric drive to fill torque during gearshift operation. The features of DE20118908 and EP2574516 are in the preamble of claim 1.

EP 1 504 946 A2 relates to a transmission for a vehicle, and more particularly to a transmission for a vehicle in which gear shifts have been automated.

### State of the art

Hybrid vehicles can operate in at least three different modes:
- a pure electric mode, in which the sole electric drivetrain moves the vehicle,
- a pure thermal mode, in which the thermal drivetrain moves the vehicle,
- a hybrid mode, in which both the aforesaid drivetrains are active and connected to the driveline.

Commercial and industrial vehicles are well-known to have a significant mass, especially when they are loaded. In recent year, car manufacturers have started using hybrid or multimode drivelines, which though are not suitable for industrial applications.

Electric motors used in the industrial field are particularly heavy and large, so as to be capable of moving the vehicle even when it is completely loaded.

The vehicle can run with the electric drivetrain active both in the pure thermal mode, namely with the electric drivetrain detached from the driveline, and in the hybrid mode, in which both drivetrains cooperate to move the vehicle.

While the electric drivetrain has a high degree of elasticity, to the extent that it can be directly connected to the vehicle driveline downstream of the gearbox, the thermal drivetrain needs a gearbox, which, in commercial and industrial vehicles, has discrete transmission ratios. During gear changes, while the vehicle is accelerating, there are evident drive gaps. When the vehicle is operating with a full load and the gears are very low (first, second, third gear), the time needed to select a higher gear negatively affects the dynamics of the vehicle.

### Summary of the invention

The object of the invention is to provide a driveline of a hybrid vehicle, in particular of an industrial or commercial vehicle, which is designed to improve the dynamic behaviour of the vehicle during the acceleration phases in which the thermal drivetrain is operating.

This object is achieved by a method according to claim 1, a driveline according to claim 4 and a vehicle according to claim 7.

The driveline according to the invention implements a manual, automatic or robotized gearbox having discrete transmission ratios.

The idea on which the invention is based is that of connecting the electric drivetrain to the driveline at least during the vehicle acceleration phases, so as to guide the driveline during gear changes, i.e. when the thermal drivetrain is disconnected from the driveline.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 shows an example of a driveline according to the invention;
figure 2 shows a time diagram of electric signals that intervene in the control of said electric drivetrain,
figure 3 shows a development of the torque offered to the drive axle of the vehicle according to a preferred embodiment of the invention.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

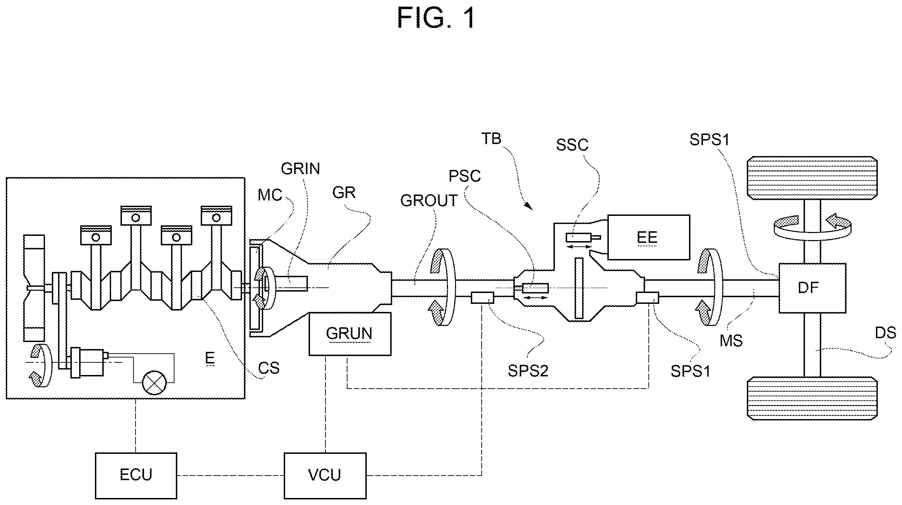

Figure 1 shows a preferred example of a vehicle driveline of a hybrid vehicle according to the invention.

On the left of the figure you can see a schematic representation of a thermal drivetrain E with four inline cylinders/pistons. Evidently, the thermal drivetrain can also have a different number or a different arrangement of the cylinders.

The thermal drivetrain E comprises a crankshaft CS, to which the pistons are connected.

The crankshaft of the thermal drivetrain is connected to the gearbox GR, usually by means of a main coupling device MC, which preferably is a clutch with packable discs, both when the gearbox is manual and when the gearbox is robotized.

The gearbox GR comprises an input shaft GRIN, usually called "primary shaft", connected to the thermal drivetrain E and an output shaft GROUT, generally called "secondary shaft", connected to the vehicle drive axle DS. Between the input shaft and the output shaft there are interposed a plurality of gears to obtain different discrete transmission ratios in known manners.

The gearbox GR preferably comprises a processing unit GRUN configured to identify or select an optimal transmission ratio of the gearbox based on a signal of a first speed sensor SPS1, which, according to a preferred variant of the invention, is connected to the main drive shaft MS, which is operatively interposed between the output shaft GROUT and the drive axle DS of the vehicle.

The main drive shaft MS has a first end MS1 and a second end MS2, which is opposite the first one. The first end MS1 is adapted to be coupled to the output shaft GROUT by means of a first auxiliary clutch PSC, the second end MS2 is connected to the differential DF of the drive axle DS.

The main drive shaft MS can be coupled to an electric drivetrain E, preferably in an intermediate point between the first end and the second end of the main drive shaft MS or, anyway, in such a way that the interaction between the main drive shaft and the electric drivetrain is independent/irrespective of the opening or closing condition of the first auxiliary clutch PSC and/or of the opening or closing condition of the main clutch, if present. According to a preferred variant of the invention, the interconnection among the main drive shaft, the secondary shaft of the gearbox and the electric drivetrain EE is preferably carried out by means of a so-called transfer case TB, which contains, in a casing, the interconnection organs between the main drive shaft, an electric drivetrain EE and the output shaft of the gearbox. These organs preferably comprise a pair of gears to connect the rotor of the electric drivetrain to the main drive shaft, a second auxiliary clutch SSC to disconnect the rotor of the electric drivetrain from the main drive shaft MS, and the aforesaid first auxiliary clutch PSC, which, as mentioned above, interconnects the secondary shaft of the gearbox to the main drive shaft.

According to the invention, a vehicle processing unit, preferably the so-called Vehicle Control Unit (VCU), during an acceleration phase (B) in which the thermal drivetrain E is active and associated with the driveline, is configured to
- acquire a first signal indicative of an opening condition of the main clutch MC,
- acquire a second signal indicative of an expected variation of the transmission ratio of the gearbox,
- acquire a third signal indicative of a effectively implemented variation of the transmission ratio of the gearbox,
- determining a limit torque to be delivered by the electric drivetrain and a relative delivery time interval,
- control the torque delivered by the electric drivetrain based on said limit torque and said delivery time interval.

Hence, according to the invention, the electric drivetrain is activated to guide the driveline
- during a gear change (A),
- while the vehicle is accelerating (B).

The detection of a gear change indicates, in an unmistakable manner, that the vehicle currently is in thermal mode, as the electric drivetrain EE is connected to the driveline downstream of the gearbox, namely between the gearbox and the drive axle.

Furthermore, in any vehicle provided with a clutch between the gearbox and the engine, the clutch must implicitly be open during gear changes.

Therefore, according to the invention, the electric drivetrain is activated when the aforesaid conditions A and B occur simultaneously.

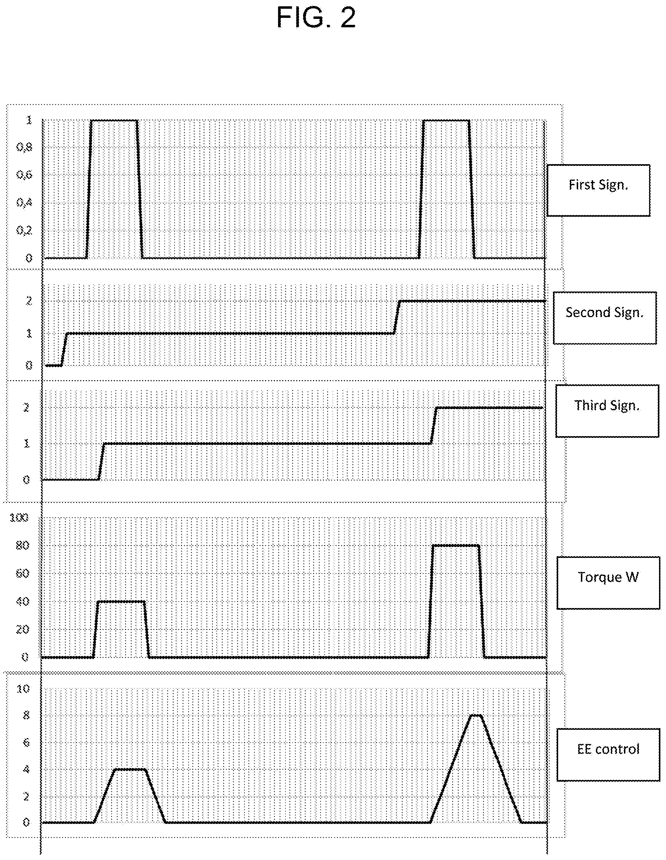

Figure 2 shows a time diagram of the signals involved in the aforesaid control. In the figure, said signals are shown from the top to the bottom according to the same order indicated above.

Hence, the first signal indicates the opening or closing condition of the main clutch MC. The signal is high when the clutch is open and, vice versa, it is low when the clutch is closed.

The second signal, with the shape of steps at different levels, indicates an expected sequence of engagement of transmission ratios, namely of the optimal transmission ratios, during the aforesaid acceleration phase of the vehicle. The third signal, which also has the shape of steps at different levels, indicates the transmission ratios actually engaged in an automatic manner by the gear box, if it is robotized, or in a manual manner by the driver of the vehicle.

Thus, there is an evident time difference between the ideal time for a gear change and the actual one.

The fourth step-shaped signal, unlike the first signal, does not necessarily switch between two extreme positions - high or low - but it can have a variable amplitude depending on the torque value to be delivered by the electric drivetrain to the driveline.

From the point of view of time, each step of the fourth signal begins when the main clutch is open and at the same time there is - second signal - the engagement of a higher gear.

The height of each step of the fourth signal, namely the limit torque to be delivered by the electric drivetrain, is calculated as a mean value between a first torque value delivered by the thermal drivetrain before opening of the main clutch and a second value of a torque delivered by the thermal drivetrain after engagement of the higher ratio based on a delivery curve of the thermal drivetrain, previously stored in a memory of the processing unit.

Moreover, a step of the fourth signal has a negative front, namely ends, upon expiry of a time-out. Said time-out has a duration that is shorter than ½ second.

As to the fifth signal, it represents the control carried out by the power supply unit on the electric drivetrain.

Said unit (not shown) supplies power to the electric drivetrain according to a ramp that can have a fixed or variable slope depending on other parameters, namely at least one among:
- SOC (state of charge of the batteries) (not part of the present invention),
- Limit torque value expressed by the corresponding step of the fourth signal,
- Temperature of the electric drivetrain (not part of the present invention).

When the electric drivetrain EE can be disconnected from the driveline, as shown in figure 1, then, in order to implement the invention, it is necessary to close the second secondary clutch, housed in the transfer case, so as to allow the electric drivetrain to deliver the torque to the drive axle DS.

It should be pointed out that processing units capable of estimating the correct transmission ratio and, if necessary, controlling the engagement thereof are known.

If there is a manual gearbox, the processing unit GRUN of the gearbox simply indicates to the driver, on the dashboard, the transmission ratio to be engaged.

When the driveline operates in pure electric mode, the VCU is configured to maintain the second auxiliary clutch SSC steadily closed at least when the electric drivetrain is active.

It should be pointed out that the processing units GRUN, VCU and ECU are mutually interfaced by means of a CAN bus and, therefore, even though some sensors are connected to one of the processing units, the relative measured values are made public on the CAN network by the processing units. Therefore, the VCU is allowed to learn the speed the of secondary shaft GROUT of the gearbox by means of the sensor SPS2, which is directly connected to it, and the speed of the main drive shaft MS indirectly through the GRUN. Among the different items of information made public on the CAN network, there are the speed of the thermal drivetrain, the torque delivered by the electric drivetrain and by the thermal drivetrain, the speed of the main drive shaft and of the secondary shaft of the gearbox, besides the opening (disengagement) and closing (engagement) states of the clutches and the currently engaged gear of the gearbox. During an acceleration of the vehicle, the power supplied to the wheels increases and, when dealing with a gear change, it is approximately unchanged an instant before and an instant after the gear change. Therefore, the torque delivered by the engine an instant before the gear change is evidently smaller than the torque delivered by the engine after the gear change. As a matter of fact, power results the product between the delivered torque and the number of revolutions of the engine. Therefore, if the system detects that the vehicle is in an acceleration phase, for example based on the monitoring of a derivative of the speed of the vehicle, the engagement of a higher transmission ratio evidently leads to the delivery of a greater torque compared to the previously engaged transmission ratio.

In addition, given that torque limiting curves of engines, especially gasoline engine, are decreasing with increasing rotation speeds, than the aforesaid phenomena is heightened.

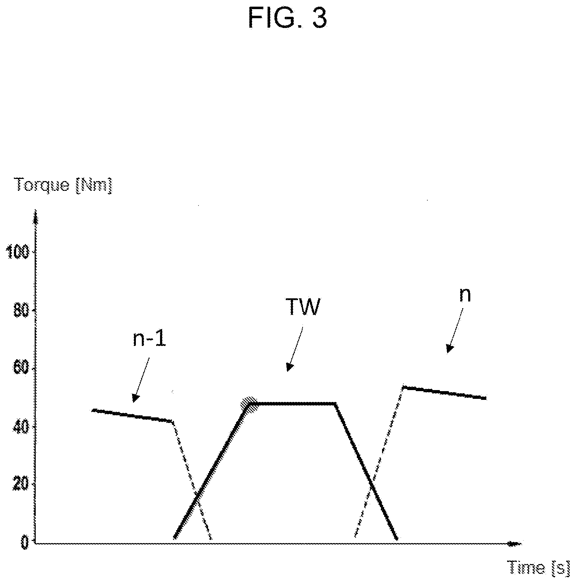

Indeed, figure 3 shows the decreasing time development of the torque delivered by the internal combustion engine for the transmission ratio n-1 and, subsequently, for the transmission ratio **n.**

You can clearly see that the torque delivered an instant after the gear change is greater than the torque delivered before the gear change.

Between the two torque signals there is the intervention of the electric drivetrain, which, according to a preferred variant of the invention, delivers a mean torque between the torque value delivered by the thermal engine immediately before the opening of the main clutch MC and immediately after its closing.

According to a preferred embodiment of the invention, the delivery of torque by the electric drivetrain is made smoother in order to avoid uncomfortable tugs, with a delivery hump passing through the aforesaid mean value. According to a preferred variant of the invention, which can be combined with any of the previous variants, the acceleration phase of the vehicle can be determined based on the derivative of the position of the accelerator pedal calculated in sampling time intervals of some tens of ms, for example 100 ms.

Each sampling, to avoid noises, preferably lasts 10 ms. Since the gear change interrupts the acceleration of the vehicle, the acceleration state of the vehicle is evidently considered as such even during the releasing of the accelerator pedal and the consequent opening of the clutch, if the vehicle is provided with a manual gearbox.

In particular, when the system detects that the pedal is subjected to an increasing angle in a predetermined time interval, followed by the opening of the main clutch with the brake pedal completely released, it can definitely establish that the electric drivetrain needs to be activated as described above.

Preferably, when the vehicle is provided with a manual gearbox, it can also occur that the accelerator pedal is completely released during the gear change, whereas, when the vehicle is provided with an automatic gearbox, you need to control that the accelerator pedal is not released, hence it maintains the same angle or is pressed further.

## Claims

1. Method for controlling a driveline of a hybrid vehicle, in particular of an industrial or commercial vehicle, the driveline comprising a thermal drivetrain (E), a gearbox (GR) connectable to said thermal drivetrain (E) by means of a main clutch (MC), and an electric drivetrain (EE) connectable to the driveline in a point thereof between said gearbox (GR) and a drive axle (DS) of the vehicle, the method comprising a step of activating said electric drivetrain to drive the driveline during a gear change (A), while, simultaneously, the vehicle is accelerating (B); the method further comprising the following steps prior to activation of the electric drivetrain (EE):
- acquisition of a first signal representative of an open condition of said main clutch,
- acquisition of a second signal indicative of an expected variation of the transmission ratio of the gearbox,
- acquisition of a third signal indicative of a effectively implemented variation of the transmission ratio of the gearbox,
- determining a limit torque to be delivered by the electric drivetrain and a relative delivery time interval;
- control the torque delivered by the electric drivetrain (EE) based on said limit torque and said delivery time interval;
the method being **characterized in that**:
said limit torque is calculated as a mean value between a first torque value delivered by the thermal drivetrain before opening of the main clutch and a second value of a torque delivered by the thermal drivetrain after engagement of the higher ratio based on a delivery curve of the thermal drivetrain, previously stored in a memory of the processing unit, and
a step of the limit torque has a negative front upon expiry of a time-out having a duration that is shorter than ½ second.

2. Method according to claim 1, comprising a step of deactivating said electric drivetrain (EE) when, at the end of said gear change, said main clutch is closed again.

3. Method according to claim 1 or 2, wherein said delivery time interval has a predetermined value of a value lower than the gear change time interval.

4. Driveline of a hybrid vehicle, in particular of an industrial or commercial vehicle, the driveline comprising a thermal drivetrain (E), a gearbox (GR) connectable to said thermal drivetrain (E) by means of a main clutch (MC), and an electric drivetrain (EE) connectable to the driveline in a point thereof between said gearbox (GR) and a drive axle (DS) of the vehicle, second processing means configured to activate said electric drivetrain to guide the driveline during a gear change (A), while, simultaneously, the vehicle is accelerating (B), and configured to execute all the steps of any one of previous claims 1 - 3.

5. Driveline according to claim 4, wherein said gearbox (GR) has an input shaft (GRIN) adapted to be connected with said thermal drivetrain (E) and an output shaft (GROUT) to drive a drive axle (DS) of a vehicle and first processing means (GRUN) configured to identify an expected transmission ratio, and wherein the driveline has a main drive shaft (MS), interposed between the output shaft (GROUT) and said drive axle (DS), a first auxiliary clutch (PSC) to interconnect said main drive shaft and said output shaft, wherein said main drive shaft is associable with/diassociable from said electric drivetrain (EE) regardless of a state of opening or closing of said first auxiliary clutch (PSC).

6. Driveline according to claim 4 or 5, wherein said electric drivetrain (EE) is associated with said main drive shaft by means of a pair of transmission gears and a second auxiliary clutch (SSC) and wherein said second processing means are configured to maintain stably closed said second auxiliary clutch at least when the electric drivetrain is active.

7. Commercial or industrial hybrid vehicle comprising a thermal drivetrain (E) and an electric drivetrain (EE) and a driveline according to any one of claims 4 to 6.

## Patentansprüche

1. Verfahren zum Steuern eines Antriebsstrangs eines Hybridfahrzeugs, insbesondere eines Industrie- oder Nutzfahrzeugs, wobei der Antriebsstrang einen thermischen Antriebsstrang (E), ein Getriebe (GR), das mit dem thermischen Antriebsstrang (E) mittels einer Hauptkupplung (MC) verbindbar ist, und einen elektrischen Antriebsstrang (EE) umfasst, der mit dem Antriebsstrang an einem Punkt davon zwischen dem Getriebe (GR) und einer Antriebsachse (DS) des Fahrzeugs verbindbar ist, wobei das Verfahren einen Schritt des Aktivierens des elektrischen Antriebsstrangs umfasst, um den Antriebsstrang während eines Gangwechsels (A) anzutreiben, während gleichzeitig das Fahrzeug beschleunigt (B); wobei das Verfahren ferner die folgenden Schritte vor der Aktivierung des elektrischen Antriebsstrangs (EE) umfasst:
- Erfassen eines ersten Signals, das für einen offenen Zustand der Hauptkupplung repräsentativ ist,
- Erfassen eines zweiten Signals, das für eine erwartete Veränderung des Übersetzungsverhältnisses des Getriebes indikativ ist,
- Erfassen eines dritten Signals, das für eine effektiv implementierte Veränderung des Übersetzungsverhältnisses des Getriebes indikativ ist,
- Bestimmen eines Grenzdrehmoments, das von dem elektrischen Antriebsstrang abgegeben werden soll, und eines relativen Abgabezeitintervalls;
- Steuern des Drehmoments, das von dem elektrischen Antriebsstrang (EE) abgegeben wird, basierend auf dem Grenzdrehmoment und dem Abgabezeitintervall;
wobei das Verfahren **dadurch gekennzeichnet ist, dass**
das Grenzdrehmoment als ein Mittelwert zwischen einem ersten Drehmomentwert, der von dem thermischen Antriebsstrang vor dem Öffnen der Hauptkupplung abgegeben wird, und einem zweiten Wert eines Drehmoments berechnet wird, das von dem thermischen Antriebsstrang nach dem Einlegen des höheren Verhältnisses abgegeben wird, basierend auf einer Abgabekurve des thermischen Antriebsstrangs, die zuvor in einem Speicher der Verarbeitungseinheit gespeichert wurde, und
ein Schritt des Grenzdrehmoments eine negative Front bei Ablauf einer Zeitüberschreitung aufweist, die eine Dauer aufweist, die kürzer als 1/2 Sekunde ist.

2. Verfahren nach Anspruch 1, umfassend einen Schritt des Deaktivierens des elektrischen Antriebsstrangs (EE), wenn am Ende des Gangwechsels die Hauptkupplung wieder geschlossen wird.

3. Verfahren nach Anspruch 1 oder 2, wobei das Abgabezeitintervall einen vorbestimmten Wert eines Werts aufweist, der kleiner als das Gangwechselzeitintervall ist.

4. Antriebsstrang eines Hybridfahrzeugs, insbesondere eines Industrie- oder Nutzfahrzeugs, wobei der Antriebsstrang einen thermischen Antriebsstrang (E), ein Getriebe (GR), das mit dem thermischen Antriebsstrang (E) mittels einer Hauptkupplung (MC) verbindbar ist, und einen elektrischen Antriebsstrang (EE) umfasst, der mit dem Antriebsstrang an einem Punkt davon zwischen dem Getriebe (GR) und einer Antriebsachse (DS) des Fahrzeugs verbindbar ist, wobei zweite Verarbeitungsmittel konfiguriert sind, um den elektrischen Antriebsstrang zu aktivieren, um den Antriebsstrang während eines Gangwechsels (A) zu führen, während gleichzeitig das Fahrzeug beschleunigt (B), und konfiguriert sind, um alle Schritte nach einem der vorhergehenden Ansprüche 1-3 auszuführen.

5. Antriebsstrang nach Anspruch 4, wobei das Getriebe (GR) eine Eingangswelle (GRIN), die angepasst ist, um mit dem thermischen Antriebsstrang (E) verbunden zu werden, und eine Ausgangswelle (GROUT), um eine Antriebsachse (DS) eines Fahrzeugs anzutreiben, und erste Verarbeitungsmittel (GRUN) aufweist, die konfiguriert sind, um ein erwartetes Übersetzungsverhältnis zu identifizieren, und wobei der Antriebsstrang eine Hauptantriebswelle (MS), die zwischen der Ausgangswelle (GROUT) und der Antriebsachse (DS) angeordnet ist, eine erste Hilfskupplung (PSC), um die Hauptantriebswelle und die Ausgangswelle zu verbinden, aufweist, wobei die Hauptantriebswelle mit/von dem elektrischen Antriebsstrang (EE) unabhängig von einem Zustand des Öffnens oder Schließens der ersten Hilfskupplung (PSC) verbindbar/trennbar ist.

6. Antriebsstrang nach Anspruch 4 oder 5, wobei der elektrische Antriebsstrang (EE) mit der Hauptantriebswelle mittels eines Paars von Übersetzungszahnrädern und einer zweiten Hilfskupplung (SSC) verbunden ist und wobei die zweiten Verarbeitungsmittel konfiguriert sind, um die zweite Hilfskupplung zumindest dann stabil geschlossen zu halten, wenn der elektrische Antriebsstrang aktiv ist.

7. Nutzfahrzeug oder Industriehybridfahrzeug, umfassend einen thermischen Antriebsstrang (E) und einen elektrischen Antriebsstrang (EE) und einen Antriebsstrang nach einem der Ansprüche 4 bis 6.

## Revendications

1. Procédé pour contrôler une transmission d'un véhicule hybride, en particulier d'un véhicule industriel ou commercial, la transmission comprenant un motopropulseur thermique (E), une boîte de vitesses (GR) pouvant être raccordée audit motopropulseur thermique (E) au moyen d'un embrayage principal (MC), et un motopropulseur électrique (EE) pouvant être raccordé à la transmission dans un point de cette dernière compris entre ladite boîte de vitesses (GR) et un essieu d'entraînement (DS) du véhicule, le procédé comprenant une étape pour activer ledit motopropulseur électrique afin d'entraîner la transmission pendant un changement de vitesse (A), alors que le véhicule accélère (B) simultanément ; le procédé comprenant en outre les étapes suivantes avant l'activation du motopropulseur électrique (EE) ;
l'acquisition d'un premier signal représentatif d'une condition ouverte dudit embrayage principal,
l'acquisition d'un deuxième signal indicatif d'une variation prévue du rapport de transmission de la boîte de vitesses,
l'acquisition d'un troisième signal indicatif d'une variation effectivement mise en œuvre du rapport de transmission de la boîte de vitesses,
la détermination d'un couple limite destiné à être distribué par le motopropulseur électrique et d'un intervalle de temps de distribution relatif ;
le contrôle du couple distribué par le motopropulseur électrique (EE) sur la base dudit couple limite et dudit intervalle de temps de distribution ;
le procédé étant **caractérisé en ce que** :
ledit couple limite est calculé en tant que valeur moyenne entre une première valeur de couple distribué par le motopropulseur thermique avant l'ouverture de l'embrayage principal et une seconde valeur d'un couple distribué par le motopropulseur thermique après la mise en prise du rapport supérieur sur la base d'une courbe de distribution du motopropulseur thermique, préalablement stockée dans une mémoire de l'unité de traitement, et
un palier du couple limite présente un front négatif suite à l'expiration d'un délai d'attente ayant une durée qui est inférieure à ½ seconde.

2. Procédé selon la revendication 1, comprenant une étape pour désactiver ledit motopropulseur électrique (EE) lorsque, à la fin dudit changement de vitesse, ledit embrayage principal est à nouveau fermé.

3. Procédé selon la revendication 1 ou 2, dans lequel ledit intervalle de temps de distribution a une valeur prédéterminée d'une valeur inférieure à l'intervalle de temps de changement de vitesse.

4. Transmission d'un véhicule hybride, en particulier d'un véhicule industriel ou commercial, la transmission comprenant un motopropulseur thermique (E), une boîte de vitesses (GR) pouvant être raccordée audit motopropulseur thermique (E) au moyen d'un embrayage principal (MC), et un motopropulseur électrique (EE) pouvant être raccordé à la transmission dans un point de cette dernière compris entre ladite boîte de vitesses (GR) et un essieu d'entraînement (DS) du véhicule, des seconds moyens de traitement configurés pour activer ledit motopropulseur électrique afin de guider la transmission pendant un changement de vitesse (A), alors que le véhicule accélère (B) simultanément, et
configurée pour exécuter toutes les étapes selon l'une quelconque des revendications 1 à 3.

5. Transmission selon la revendication 4, dans laquelle ladite boîte de vitesses (GR) a un arbre d'entrée (GRIN) adapté pour être raccordé audit motopropulseur thermique (E) et un arbre de sortie (GROUT) pour entraîner un essieu d'entraînement (DS) d'un véhicule, et des premiers moyens de traitement (GRUN) configurés pour identifier un rapport de transmission prévu, et dans laquelle la transmission a un arbre d'entraînement principal (MS), intercalé entre l'arbre de sortie (GROUT) et ledit essieu d'entraînement (DS), un premier embrayage auxiliaire (PSC) pour interconnecter ledit arbre d'entraînement principal et ledit arbre de sortie, dans laquelle ledit arbre d'entraînement principal peut être associé avec/peut être dissocié dudit motopropulseur électrique (EE) indépendamment d'un état d'ouverture ou de fermeture dudit premier embrayage auxiliaire (PSC).

6. Transmission selon la revendication 4 ou 5, dans laquelle ledit motopropulseur électrique (EE) est associé avec ledit arbre d'entraînement principal au moyen d'une paire d'engrenages de transmission et d'un second embrayage auxiliaire (SSC) et dans laquelle lesdits seconds moyens de traitement sont configurés pour maintenir fermé, de manière stable, ledit second embrayage auxiliaire, au moins lorsque le motopropulseur électrique est actif.

7. Véhicule hybride commercial ou industriel comprenant un motopropulseur thermique (E) et un motopropulseur électrique (EE) et une transmission selon l'une quelconque des revendications 4 à 6.
